# FASCICULE DE BREVET EUROPEEN

(11) **EP 0 757 504 B1**
(45) Date de publication et mention de la délivrance du brevet: **21.05.2003**
(21) Numéro de dépôt: 96202090.5
(22) Date de dépôt: 24.07.1996
(51) Int. Cl.: H04Q 11/04, H04L 29/14

(54) **Sécurisation par doublement de voies logiques dans un réseau de télécommunications**
Sicherung durch Duplizierung von virtuellen Pfaden in einem Telekommunikationsnetzwerk
Securing by duplication of virtual circuits in a telecommunications network

(30) Priorité: 26.07.1995 FR 9509084
(43) Date de publication de la demande: 05.02.1997
(73) Titulaire: Koninklijke Philips Electronics N.V., 5621 BA Eindhoven (NL)
(72) Inventeur: Damien, Souad, Société Civile S.P.I.D., 75008 Paris (FR)
(74) Mandataire: Chaffraix, Jean

(56) Documents cités:
- EP-A- 0 535 396
- DE-A- 4 331 577
- US-A- 5 315 581

## Description

L'invention concerne un réseau de télécommunications à commutation par paquets comportant une pluralité de noeuds de commutation entre lesquels des paquets sont destinés à être véhiculés par l'intermédiaire de voies logiques, ledit réseau comportant, afin de sécuriser une voie logique dite voie principale entre un premier et un second noeud de commutation, des moyens pour associer à ladite voie principale au moins une autre voie logique dite voie de secours destinée à véhiculer les mêmes paquets, ledit second noeud comportant des moyens de basculement d'une voie principale à une voie de secours.

L'invention concerne également un noeud de commutation destiné à être utilisé dans un réseau de commutation par paquets dans lequel les paquets sont véhiculés par l'intermédiaire de voies logiques et qui comporte, afin de sécuriser une voie logique dite voie principale, des moyens pour associer à cette voie principale au moins une autre voie logique dite voie de secours destinée à véhiculer les mêmes paquets, ledit noeud comportant des moyens de basculement d'une voie principale à une voie de secours.

L'invention a d'importantes application dans le domaine de la sécurisation des réseaux de télécommunications, notamment pour les réseaux de type ATM.

Les réseaux de type ATM utilisent la notion de conduits virtuels qui permet de manipuler d'un seul bloc un ensemble pouvant aller jusqu'à 2¹⁶ circuits virtuels. En particulier, il est ainsi possible de sécuriser le réseau en dupliquant certains de ces conduits. Une telle solution est décrite dans la demande de brevet canadien n°2,132,063 déposée par la société Siemens le 14 septembre 1994.

Cette demande de brevet décrit en effet l'utilisation entre un premier et un second noeuds de commutation d'un réseau ATM de paires de conduits formées d'un conduit appelé conduit principal et d'un conduit appelé conduit de secours qui utilisent des chemins différents dans le réseau. Les cellules arrivant sur ledit premier noeud de commutation sont dupliquées de façon à être transmises sur le conduit principal et sur le conduit de secours vers ledit second noeud de commutation. En fonctionnement normal seules les cellules qui arrivent sur le conduit principal sont transmises par le second noeud de commutation, les cellules qui arrivent sur le conduit de secours étant abandonnées. En revanche, en cas de dysfonctionnement sur le conduit principal, ce sont les cellules qui arrivent sur le conduit de secours qui sont transmises par le second noeud de commutation, les cellules qui arrivent sur le conduit principal étant abandonnées.

Toutefois, pour que cette sécurisation soit efficace, il est nécessaire que le conduit principal et le conduit de secours utilisent dans la mesure du possible des chemins différents. Ceci implique des temps de traversée du réseau différents sur chacun de ces conduits. A titre d'exemple, pour un réseau haut débit qui utilise des moyens de transmission basés sur la fibre optique, une différence de parcours d'une centaine de kilomètres entre deux conduits introduit un décalage de l'ordre de la milliseconde. Pour des cellules de 53 octets (taille de la cellule ATM) et pour des conduits virtuels d'un débit de quelques Megabit/s, un tel décalage est susceptible d'entraîner la perte ou la duplication d'une dizaine de cellules lors de la commutation d'un conduit principal à un conduit de secours.

Une telle perte ou duplication de cellules conduit à la perturbation de la plupart des services portés par le conduit virtuel concerné, d'autant plus que les cellules provenant des différents services sont en général entrelacées au maximum de façon à assurer un débit uniforme pour les différents services. Les couches supérieures des services perturbés, constatant une anomalie, feront des demandes de retransmission, ce qui aura un effet "boule de neige" très néfaste notamment dans le cas ou la cause de la commutation du conduit principal au conduit de secours était justement un engorgement du conduit principal.

L'invention a pour but de proposer un système qui remédie à cet inconvénient.

Pour cela un système selon l'invention et tel que décrit dans le paragraphe introductif est caractérisé en ce que le second noeud comporte des moyens de calcul d'un décalage entre les paquets reçus sur lesdites voies, et des moyens de contrôle du basculement pour éviter des pertes ou duplications de paquets en tenant compte dudit décalage.

On notera que le brevet US 5,315,581 décrit l'utilisation de lignes de transmission redondantes dans un réseau ATM. Dans ce document une ligne de transmission physique, dite ligne normale, est doublée par une autre ligne de transmission physique, dite ligne de secours, la différence de délai de transmission entre la ligne normale et la ligne de secours étant relativement faible par rapport au temps de transmission d'une cellule. Dans ce document, le décalage entre la ligne de transmission principale et la ligne de transmission de secours est corrigé de façon systématique, indépendamment de toute commutation.

L'invention sera mieux comprise et d'autres détails apparaîtront dans la description qui va suivre en regard des dessins annexés qui sont donnés à titre d'exemples non limitatifs et dans lesquels:
- la figure 1 représente schématiquement un réseau selon l'invention,
- la figure 2 est un organigramme de fonctionnement d'un premier procédé de recherche du décalage entre un conduit principal et un conduit de secours,
- la figure 3 est un organigramme de fonctionnement d'un second procédé de recherche du décalage entre un conduit principal et un conduit de secours,
- la figure 4 est un organigramme de fonctionnement d'un procédé de basculement d'un conduit à un autre,
- la figure 5 est un résumé sous forme de blocs fonctionnels de l'ensemble des fonctions mises en oeuvre dans l'invention,
- la figure 6 représente un commutateur selon l'invention.

Le mode de réalisation qui va maintenant être décrit s'applique à un réseau de commutation ATM avec sécurisation d'au moins certains conduits virtuels et avec surveillance de la qualité des conduits virtuels conformément à la recommandation I610 du CCITT.

Toutefois l'invention est applicable à d'autres niveaux de sécurisation (sécurisation au niveau circuit virtuel par exemple), à d'autre type de connexion (notamment à des connexions non surveillées en qualité) et à tout type de réseau de commutation par paquets dans lequel l'ordre de délivrance des paquets n'est pas modifié.

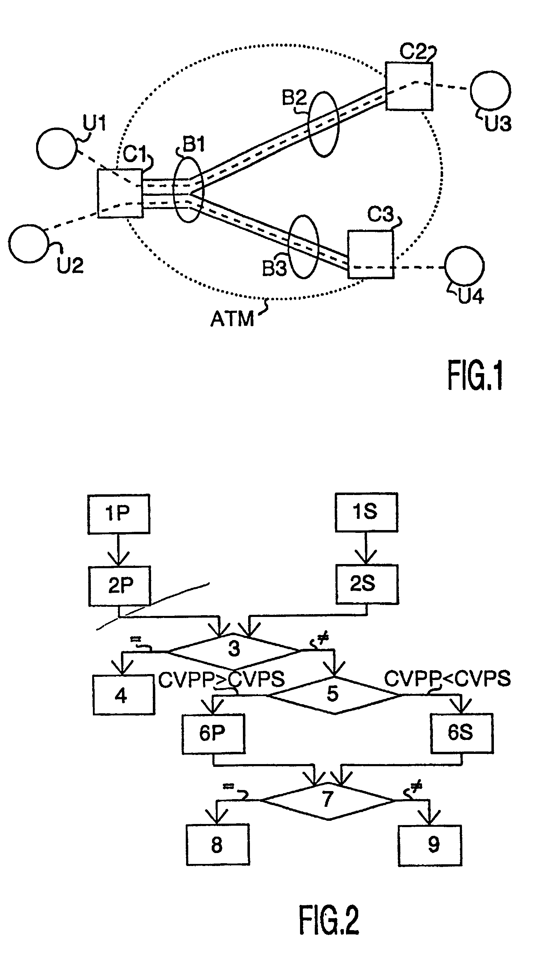

La figure 1 représente schématiquement un réseau ATM selon l'invention. Un tel réseau comporte des brasseurs B1, B2 et B3 qui remplissent une fonction de commutation au niveau conduits virtuels VP et des commutateurs C1, C2 et C3 qui constituent une interface entre le réseau ATM et les utilisateurs finaux U1, U2, U3 et U4 et remplissent une fonction de commutation au niveau circuits virtuels VC. Ces brasseurs et ces commutateurs sont, dans cet exemple, reliés entre eux par des artères physiques en fibres optiques véhiculant des trames SDH (de l'anglais Synchronous Digital Hierarchy, cette hiérarchie de débits a été définie par le CCITT) contenant plusieurs conduits virtuels VP. Chaque utilisateur final est identifié par un couple (VP, VC) et l'information d'adressage utilisée pour router les cellules dans le réseau comporte deux champs: un identificateur de conduit virtuel VPI et un identificateur de circuit virtuel VCI.

La technique de commutation ATM consiste à segmenter le trafic en cellules de 53 octets dont 48 octets pour le message et 5 octets pour l'entête. Au niveau des commutateurs, les flux d'informations provenant des différents utilisateurs sont découpés en cellules qui sont multiplexées dans le temps sur des conduits virtuels. Des cellules vides sont introduites régulièrement entre les cellules de données véhiculées par les différents conduits virtuels pour obtenir un débit total égal au débit d'une artère SDH c'est-à-dire 155Mb/s.

Conformément à la recommandation I610 du CCITT, des cellules spécifiques appelées cellules OAM de type F4 sont insérées dans le flux de cellules de données de façon pseudo-périodique pour surveiller la qualité des conduits virtuels VP.

Ces cellules sont identifiées par une valeur d'identificateur de circuit virtuel VCI préassignée. Leur insertion est pseudo-périodique dans la mesure où, conformément à la recommandation I610, les demandes d'insertion de cellule OAM sont lancées périodiquement après chaque série de N/2 cellules (N pouvant prendre les valeurs 128, 256, 512 ou 1024), la cellule OAM étant introduite à l'emplacement de la première cellule vide à la suite d'une telle demande.

Les cellules OAM de type F4 de gestion de la qualité des conduits virtuels comportent notamment les deux champs suivants qui seront utilisés dans la suite de la description:
- un champ TUC codé sur 16 bits qui indique le nombre total de cellules utilisateur transmises avant l'insertion de la cellule OAM, modulo 65536.
- un code de détection d'erreur de type CRC calculé sur tous les champs d'information des cellules de données transmises entre cette cellule OAM et la précédente.

Des cellules de surveillance identiques appelées cellules OAM de type F5 sont prévues par la recommandation I610 du CCITT au niveau circuits virtuels. Elles sont identifiées par une valeur préassignée d'un champ PT contenu dans l'entête des cellules ATM. Ainsi l'invention qui est décrite dans son application à la sécurisation des conduits virtuels VP est applicable directement à une sécurisation au niveau circuits virtuels VC.

Dans le mode de réalisation qui va être décrit, la sécurisation du réseau est assurée en dupliquant certains conduits virtuels VP. Pour cela toutes les cellules de données d'un conduit virtuel appelé conduit principal et identifié par un identificateur VPI1 sont recopiées dans un autre conduit virtuel appelé conduit de secours et identifié par un identificateur VPI2. Seuls les champs VPI et les codes de contrôle de l'entête des cellules sont différents. Et seules les cellules OAM qui sont introduites dans les conduits virtuels de façon pseudo-périodique peuvent avoir des emplacement différents dans le conduit principal et dans le conduit de secours.

Pour que cette sécurisation soit efficace, le conduit principal et le conduit de secours doivent emprunter des chemins différents. Les temps de traversée du réseau diffèrent donc pour les deux conduits. Le décalage entre un conduit principal et un conduit de secours, en nombre de cellules, doit être connu à tout instant de façon à pouvoir commuter de l'un à l'autre sans perte ni duplication de cellules.

Ce décalage doit être connu dès l'ouverture du conduit virtuel avant même d'avoir reçu des cellules de surveillance OAM. Pour cela l'invention consiste à utiliser un premier procédé décrit sur la figure 2.

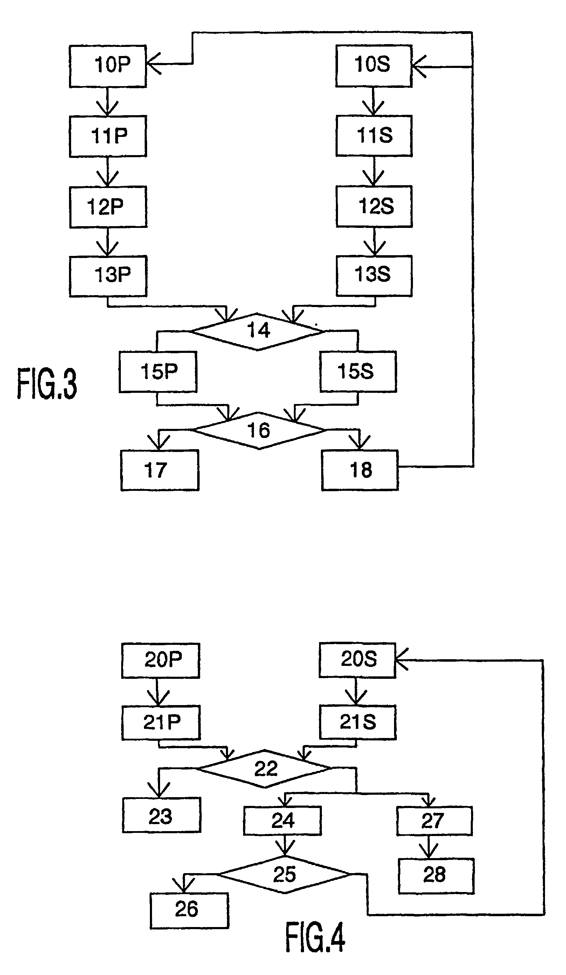

D'après la figure 2 les différentes étapes de ce premier procédé sont les suivantes:
- case 1P: attente de réception d'une cellule de données ATM sur le conduit virtuel principal. Dès qu'une telle cellule est reçue le procédé se poursuit à la case 2P.
- case 1S: attente de réception d'une cellule de données ATM sur le conduit virtuel de secours. Dès qu'une telle cellule est reçue le procédé se poursuit à la case 2S.
- case 2P: un compteur CVPP indiquant le nombre de cellules reçues sur le conduit principal VPP est incrémenté. Puis le fonctionnement se poursuit à la case 3.
- case 2S: un compteur CVPS indiquant le nombre de cellules reçues sur le conduit de secours VPS est incrémenté. Puis le fonctionnement se poursuit à la case 3.
- case 3: les champs d'information des cellules respectivement reçues sur le conduit principal et sur le conduit de secours sont comparés. S'ils sont identiques le fonctionnement se termine à la case 4. Sinon il se poursuit à la case 5.
- case 4: fin de ce premier procédé. Le décalage entre le conduit principal et le conduit de secours est connu (dans ce cas il est nul).
- case 5: les deux compteurs CVPP et CVPS sont comparés. Si CVPP>CVPS le fonctionnement se poursuit à la case 6P. Sinon il se poursuit à la case 6S.
- case 6P: après le passage de (CVPP-CVPS) cellules sur le conduit de secours, la première cellule arrivant sur ce conduit est stockée. Parallèlement la première cellule qui arrive sur le conduit principal est également stockée.
Puis le fonctionnement se poursuit à la case 7.
- case 6S: après le passage de (CVPS-CVPP) cellules sur le conduit principal, la première cellule arrivant sur ce conduit est stockée. Parallèlement la première cellule qui arrive sur le conduit de secours est également stockée.
Puis le fonctionnement se poursuit à la case 7.
- case 7: les champs d'information des cellules stockées aux cases 6P ou 6S sont comparés. S'ils sont identiques le fonctionnement se termine à la case 8. Sinon il se poursuit à la case 9.
- case 8: fin de ce premier procédé. Le décalage entre le conduit principal et le conduit de secours est connu. Il est égal à la différence entre les deux compteurs CVPP et CVPS. A chaque cellule du conduit principal correspond donc compte tenu de ce décalage une cellule du conduit de secours appelée cellule homologue.
- case 9: le décalage entre les deux conduits n'a pas pu être évalué par application de ce premier procédé. Un second procédé décrit sur la figure 3 est alors mis en oeuvre.

Dans une première variante avantageuse de l'invention, plusieurs cellules sont acquises aux cases 1P et 1S d'une part et aux cases 6P et 6S d'autre part, et les comparaisons des cases 3 et 7 portent sur ces différentes cellules de façon à détecter la correspondance entre cellules du conduit principal et du conduit de secours malgré une éventuelle erreur au niveau bit dans un champ d'information.

Dans une autre variante, les comparaisons effectuées aux cases 3 et 7 ne portent'pas sur une identité entre les deux champs d'information des cellules mais elles utilisent un critère de maximum de vraisemblance qui admet la correspondance entre cellules dès lors que le nombre de bits qui diffèrent sur une ou plusieurs cellules reste inférieur à un seuil prédéterminé.

Le second procédé décrit sur la figure 3 utilise les informations contenues dans les cellules OAM insérées par le commutateur émetteur dans le flux de données utiles. Il est donc plus efficace que le premier puisqu'il est basé sur le nombre de cellules émises par la source et non plus sur le nombre de cellules reçues par le destinataire. Toutefois il ne peut être utilisé lors du démarrage puisqu'il nécessite pour être utilisable qu'une cellule OAM ait été préalablement reçue.

D'après la figure 3 les différentes étapes de ce second procédé sont les suivantes:
- case 10P: le flux ATM supportant le conduit principal est reçu. Les traitements des cellules OAM de type F4 de ce flux sont supposés effectués et seules les cellules OAM présentant un champ CRC correct et un champ TUC compatible avec le nombre de cellules de données reçues sont conservées. Dès qu'une telle cellule est arrivée le fonctionnement se poursuit à la case 11P.
- case 10S: De même dès qu'une cellule OAM correcte est reçue sur le conduit de secours le fonctionnement se poursuit à la case 11S.
- case 11P: le champ TUC est extrait de la cellule OAM et le compteur CVPP est initialisé avec la valeur de ce champ TUC (on suppose au départ que l'écart entre le conduit principal et le conduit de secours est inférieur à 65536 cellules). Puis le fonctionnement se poursuit à la case 12P.
- case 11S: le champ TUC est extrait de la cellule OAM et le compteur CVPS est initialisé avec la valeur de ce champ TUC. Puis le fonctionnement se poursuit à la case 12S.
- case 12P: attente de l'arrivée d'une cellule de données sur le conduit principal. Dès qu'une telle cellule est reçue le procédé passe à la case 13P.
- case 12S: attente de l'arrivée d'une cellule de données sur le conduit de secours. Dès qu'une telle cellule est reçue le procédé passe à la case 13S.
- case 13P: le compteur CVPP est incrémenté et le fonctionnement se poursuit à la case 14.
- case 13S: le compteur CVPS est incrémenté et le fonctionnement se poursuit à la case 14.
- case 14: les compteurs CVPP et CVPS qui viennent d'être initialisés avec les valeurs des champs TUC contenus dans les cellules OAM respectivement reçues sur le conduit principal et sur le conduit de secours sont comparés. Si CVPP>CVPS le fonctionnement se poursuit à la case 15P. Sinon il se poursuit à la case 15S.
- case 15P: une cellule est acquise sur le conduit le plus rapide c'est-à-dire le conduit principal dans ce cas, et son homologue se présentant sur le conduit de secours qui est le moins rapide est acquise après passage de (CVPP-CVPS) cellules. Le fonctionnement se poursuit alors à la case 16.
- case 15S: une cellule est acquise sur le conduit le plus rapide c'est-à-dire le conduit de secours dans ce cas, et son homologue se présentant sur le conduit principal qui est le moins rapide est acquise après passage de (CVPS-CVPP) cellules. Le fonctionnement se poursuit alors à la case 16.
- case 16: les champs d'information de ces cellules sont comparés. En cas d'égalité, le fonctionnement se termine à la case 17. Sinon il se poursuit à la case 18.
- case 17: fin de ce second procédé. Le décalage entre le conduit principal et le conduit de secours est connu. Il est égal à CVPP-CVPS.
- case 18: le procédé est relancé avec l'acquisition de nouvelles cellules OAM sur le conduit principal et sur le conduit de secours respectivement. Mais les compteurs CVPP et CVPS sont préalablement décalés l'un par rapport à l'autre de 65536 cellules.

De même que pour le premier procédé une variante de ce second procédé consiste à acquérir plusieurs cellules aux cases 15P et 15S, et à faire porter la comparaison de la case 16 sur ces différentes cellules de façon à détecter la correspondance entre cellules du conduit principal et du conduit de secours malgré une éventuelle erreur au niveau bit dans un champ d'information. Dans une autre variante, cette comparaison ne porte pas sur une identité entre les deux champs d'information des cellules mais elle utilise un critère de maximum de vraisemblance pour admettre ou non la correspondance entre deux cellules.

Une fois les valeurs des compteurs de cellules CVPP et CVPS initialisés et le décalage connu encore faut-il vérifier périodiquement ce décalage en contrôlant qu'il y a bien égalité entre les champs information de la cellule reçue sur le conduit principal et son homologue reçue après décalage sur le conduit de secours. Dans le cas contraire, le second procédé est relancé pour déterminer le nouveau décalage et réinitialiser les compteurs CVPP et CVPS.

Dans un mode de réalisation avantageux, ce contrôle consiste non seulement à comparer la cellule reçue avec son homologue, mais aussi avec quelques cellules qui la précèdent et quelques cellules qui la suivent de façon à détecter le décalage recherché malgré une perte ou une insertion erronée de quelques cellules ce qui permet d'éviter de relancer inutilement le second procédé de recherche du décalage. On la compare par exemple avec les deux cellules précédentes et les deux cellules suivantes.

Le décalage entre un conduit principal et son conduit de secours est ainsi disponible à tout instant de telle sorte qu'il est possible d'éviter la perte ou la duplication de cellules lors du basculement du conduit principal au conduit de secours.

L'invention porte également sur les critères utilisés pour basculer d'un conduit principal à un conduit de secours. Dans un premier mode de réalisation de l'invention, le conduit qui à un instant donné doit être choisi comme conduit principal est le conduit le plus rapide. Toutefois il convient d'éviter des basculements trop fréquents qui compliqueraient la gestion du réseau. Le basculement n'a donc lieu qu'après confirmation du retard pris par le conduit principal.

Ce mode de réalisation est mis en oeuvre au moyen d'un troisième procédé décrit sur la figure 4. La signification des différentes cases de ce procédé est donnée ci-dessous:
- case 20P: attente de réception d'une cellule de données ATM provenant du conduit principal, puis passage à la case 21P.
- case 20S: attente de réception d'une cellule de données ATM provenant du conduit de secours, puis passage à la case 21S.
- case 21P: incrémentation du compteur CVPP et passage à la case 22.
- case 21S: incrémentation du compteur CVPS et passage à la case 22.
- case 22: comparaison des compteur CVPS et CVPP. Si (CVPP>CVPS) le fonctionnement se poursuit à la case 23. Sinon il se poursuit parallèlement aux cases 24 et 27.
- case 23: la cellule qui a été reçue sur le conduit principal à la case 20P est transmise à l'usager final.
- case 24: La cellule reçue sur le conduit de secours à la case 20S est stockée à la suite d'une mémoire dite mémoire circulaire et le fonctionnement se poursuit à la case 25. Cette mémoire est par exemple une mémoire à adressage indirect d'une capacité de 60 cellules, dont l'origine est sauvegardée.
- case 25: le nombre de cellules stockées dans la mémoire circulaire est comparé à un seuil prédéfini. Au delà de ce seuil le fonctionnement se poursuit à la case 26. En deçà de ce seuil le fonctionnement reprend à la case 20S.
- case 26: le retard pris par le conduit principal est confirmé et on commute sur le conduit de secours qui devient conduit principal. Pour cela, les cellules contenues dans la mémoire circulaire à partir de l'origine sont préalablement transmises à l'utilisateur final. Puis le basculement proprement dit est effectué.
- case 27: attente de réception d'une cellule de données ATM sur le conduit principal. Dès qu'une telle cellule est reçue le fonctionnement se poursuit à la case 28.
- case 28: le compteur CVPP est incrémenté, la cellule qui vient d'être reçue est transmise à l'utilisateur final. Et l'origine de la mémoire circulaire est décalée de façon à effacer cette cellule qui a été reçue de la mémoire circulaire.

Pour éviter une perte de cellule lors du basculement d'un conduit plus lent vers un conduit plus rapide, ce mode de réalisation consiste donc à utiliser ladite mémoire circulaire pour stocker les cellules reçues en avance sur le conduit le plus rapide et à écouler les cellules contenues dans cette mémoire avant de basculer. L'introduction d'un seuil de remplissage de cette mémoire en deçà duquel le basculement n'est pas effectué permet d'éviter les basculements trop fréquents d'un conduit à un autre.

Selon une variante avantageuse de ce mode de réalisation, une mémoire supplémentaire de type FIFO (de l'anglais First In First Out) est prévue pour absorber le décalage entre le conduit principal et le conduit de secours lorsque ce décalage est supérieur à la taille de la mémoire circulaire. Une telle situation ne se présente que dans le cas où le procédé de recherche du décalage a été lancé suite à une perte du décalage entre les deux conduits, et où le décalage obtenu par ce procédé s'est révélé être supérieur à la capacité de la mémoire circulaire. Dans ce cas, les cellules arrivant sur le conduit de secours sont stockées dans la mémoire supplémentaire, et la valeur du compteur CVPS correspondant à la première cellule stockée est enregistrée. Quand le compteur CVPP atteint cette valeur, on écoule tout d'abord le contenu de la mémoire supplémentaire puis on bascule du conduit principal vers le conduit de secours. Cette mémoire supplémentaire n'est donc utilisée que dans ce cas précis. En fonctionnement normal c'est la mémoire circulaire décrite ci-dessus qui est utilisée.

Dans un autre mode de réalisation, un second critère subsidiaire est utilisé pour le basculement: la qualité du conduit principal par rapport à celle du conduit de secours. La commutation du conduit principal vers le conduit de secours n'a lieu que si ce dernier est au moins d'aussi bonne qualité que le conduit principal. L'estimation de cette qualité est faite en exploitant le champ de détection d'erreur des cellules OAM, ainsi que celui des cellules de données reçues. Dans le cas où le décalage entre les deux conduits est perdu alors qu'un basculement sur critère de rapidité doit avoir lieu, on utilise le dernier décalage connu pour effectuer ce basculement. En revanche si c'est un basculement sur critère de qualité qui doit avoir lieu le basculement est n'est pas effectué.

Dans un autre mode de réalisation de l'invention, l'utilisateur du service final a la possibilité de choisir d'autres critères de basculement par exemple il peut imposer un basculement sur le seul critère de qualité ou sur un critère dérivé d'informations fournies par la couche d'adaptation AAL du réseau ATM qui est implantée au niveau de l'application utilisateur.

Dans le cas où ces critères conduisent à effectuer un basculement du conduit le plus rapide vers le conduit le plus lent, les ¦CVPP-CVPS¦ premières cellules arrivant sur le nouveau conduit principal ne sont pas transmises à l'utilisateur final de façon à éviter toute duplication au niveau de la réception des cellules.

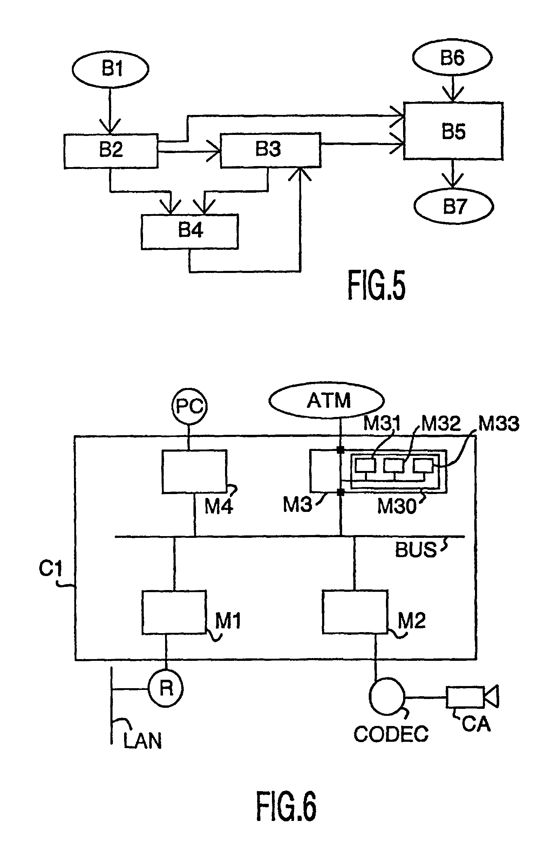

La figure 5 est un résumé sous forme de blocs fonctionnels de l'ensemble des fonctions mises en oeuvre dans l'invention.

D'après la figure 5, lorsqu'un conduit virtuel doublé d'un conduit de secours est ouvert (bloc B1), le premier procédé de recherche du décalage entre le conduit principal et le conduit de secours est activé (bloc B2). Si le décalage n'est pas trouvé le second procédé de recherche du décalage est activé (bloc B3). Une fois le décalage connu une tâche de vérification périodique est activée (bloc B4). Et si le décalage est perdu le second procédé de recherche du décalage est mis en oeuvre. Les compteurs CVPP et CVPS initialisés par les premiers et seconds procédés sont utilisés par le procédé de basculement (bloc B5) qui activé lorsque des cellules de données ATM sont reçues sur le conduit principal et sur le conduit de secours (bloc B6). Enfin les cellules sont délivrées sur l'un de ces deux conduits (bloc B7) après avoir été traitées par le procédé de basculement.

La figure 6 représente schématiquement un commutateur ATM selon l'invention.

D'après la figure 6, un tel commutateur comporte d'une part des modules d'interconnexion M1 et M2 vers des services utilisateur U1 et U2 et d'autre part un module d'interconnexion M3 vers le réseau ATM. Il comporte également un module M4 de supervision de l'ensemble desdits modules. Ce module de supervision est connecté à un ordinateur externe PC de gestion du commutateur. Ces modules sont reliés entre eux par au moins un bus de données BUS. Le service U1 est par exemple un service d'interconnexion de réseaux locaux. Le module M1 est alors relié à un routeur R qui est lui-même relié à un réseau local LAN. Le service U2 est par exemple un service de vidéoconférence, et le module M2 est alors relié à un CODEC (Codeur-décodeur) lui-même relié à une caméra CA. Ces différents modules sont réalisés à base d'un bloc processeur M30 (par exemple un M68040 de Motorola qui comporte un microprocesseur proprement dit M31, une mémoire morte M32 et une mémoire vive M33).

L'invention est alors mise en oeuvre sous forme logicielle dans le module M3 d'interconnexion vers le réseau ATM. Pour obtenir des débits plus élevés, il est toutefois nécessaire d'utiliser pour la mise en oeuvre de l'invention des circuits spécifiques qui peuvent aisément être développés par l'homme du métier à partir des organigrammes décrit précédemment en utilisant le langage VHDL par exemple.

D'autres détails concernant ledit commutateur et un réseau ATM dans lequel il est destiné à être mis en oeuvre peuvent être trouvés dans l'article "Brehat: first high bit-rate network based on ATM technology" de J. Legras, G. Onno et M. Lemonier paru dans la revue "Commutation & Transmission, n°3, 1991.

Bien que l'invention ait été décrite dans son application aux réseaux ATM pour la sécurisation de conduits virtuels surveillés en qualité, elle est applicable à une sécurisation au niveau circuit virtuel, ou à des connexions non surveillées en qualité. Dans ce dernier cas on ne dispose pas des informations fournies par les cellules OAM, et seul un procédé du type du premier procédé de recherche de décalage est utilisable, ce qui est moins fiable. Un tel dispositif permet toutefois de limiter les risques de perte ou de duplication de cellules lors des basculements. Enfin, l'invention est également applicable avec les mêmes restrictions à tout réseau de commutation de paquets dans lequel l'ordre des paquets n'est pas modifié.

## Revendications

1. Réseau de télécommunications à commutation par paquets (ATM) comportant une pluralité de noeuds de commutation (C1, C2, C3) entre lesquels des paquets sont destinés à être véhiculés par l'intermédiaire de voies logiques (VP, VC), ledit réseau comportant, afin de sécuriser une voie logique dite voie principale (VPI1) entre un premier et un second noeud de commutation, des moyens pour associer à ladite voie principale au moins une autre voie logique (VPI2), dite voie de secours, destinée à véhiculer les mêmes paquets, ledit second noeud comportant des moyens de basculement d'une voie principale à une voie de secours,
**caractérisé en ce que**, la voie logique principale et la voie logique secondaire empruntant des chemins différents, le second noeud comporte des moyens de calcul d'un décalage (|CVPP-CVPS|) entre les paquets reçus sur lesdites voies, et des moyens de contrôle pour tenir compte dudit décalage lors du basculement de la voie principale à la voie de secours, afin d'éviter des pertes ou des duplications de paquets.

2. Noeud de commutation (C1, C2, C3) destiné à être utilisé dans un réseau de commutation par paquets (ATM) dans lequel les paquets sont véhiculés par l'intermédiaire de voies logiques (VP, VC) et qui comporte, afin de sécuriser une voie logique dite voie principale (VPI1), des moyens pour associer à cette voie principale au moins une autre voie logique (VPI2), dite voie de secours, destinée à véhiculer les mêmes paquets, ledit noeud comportant des moyens de basculement d'une voie principale à une voie de secours,
**caractérisé en ce que**, la voie logique principale et la voie logique secondaire empruntant des chemins différents, ledit noeud comporte des moyens de calcul d'un décalage (|CVPP-CVPS|) entre les paquets reçus sur lesdites voies, et des moyens de contrôle pour tenir compte dudit décalage lors du basculement de la voie principale à la voie de secours, afin d'éviter des pertes ou des duplications de paquets.

3. Noeud de commutation selon la revendication 2,
dont les moyens de basculement d'une voie principale à une voie de secours sont activés en cas de dysfonctionnement de ladite voie principale, **caractérisé en ce qu'**il comporte des moyens (cases 20P à 28) de détection de dysfonctionnement basés sur un critère de vitesse de transmission des voies logiques, le dysfonctionnement d'une voie n'étant détecté que lorsque son retard est confirmé.

4. Noeud de commutation selon l'une des revendications 2 ou 3, dont les moyens de basculement d'une voie principale à une voie de secours sont activés en cas de dysfonctionnement de ladite voie principale,
**caractérisé en ce qu'**il comporte des moyens de détection de dysfonctionnement basés sur un critère de qualité des voies logiques.

5. Noeud de commutation selon l'une des revendication 2 à 4, **caractérisé en ce que** les moyens de contrôle du basculement comportent:
- une mémoire dite mémoire circulaire destinée à stocker les paquets reçus en avance sur ladite voie de secours (case 24),
- des moyens pour effacer les paquets de ladite mémoire circulaire lorsqu'ils sont ultérieurement reçus sur ladite voie principale (case 28),
- des moyens pour transmettre le contenu de la mémoire circulaire en sortie dudit second noeud de commutation avant de basculer (case 26).

6. Noeud de commutation selon la revendication 5, **caractérisé en ce que** les moyens de contrôle de basculement comportent:
- une mémoire dite mémoire supplémentaire destinée à stocker les paquets reçus en avance sur ladite voie de secours lorsque le décalage fourni par lesdits moyens de calcul est supérieur à la taille de ladite mémoire circulaire,
- des moyens pour écouler le contenu de ladite mémoire supplémentaire avant de basculer lorsque lesdits paquets sont ultérieurement reçus sur ladite voie principale.

7. Noeud de commutation selon l'une des revendications 2 à 6, **caractérisé en ce que** les moyens de calcul comportent:
- des compteurs (CVPP, CVPS) des paquets reçus sur lesdites voies logiques,
- des moyens de comparaison des paquets de même rang reçus sur la voie principale et sur la voie de secours (case 7, case 16)
- des moyens de validation dudit décalage à la différence entre lesdits compteurs, lorsque les paquets de même rang sont identiques (case 8 ; case 17).

8. Noeud de commutation selon l'une des revendications 2 à 7, **caractérisé en ce que** lesdits moyens de calcul comportent des moyens de vérification périodique de la valeur dudit décalage.

9. Noeud de commutation ATM selon l'une des revendications 7 ou 8, dans lequel les paquets traités sont appelés cellules, **caractérisé en ce qu'**il comporte des moyens pour introduire parmi les cellules de données des cellules de maintenance dites cellules OAM définies dans la recommandation 1610 du CCITT, et **en ce que** lesdits compteurs sont initialisés avec la valeur du champ TUC des cellules OAM reçues.

10. Noeud de commutation ATM selon l'une des revendications 2 à 9, **caractérisé en ce que** lesdites voies logiques sont des conduits virtuels.

## Patentansprüche

1. Telekommunikationsnetzwerk zur Paketkommutation ()ATM mit einer Vielzahl von Kommutationsknoten (Cl, C2, C3), zwischen denen die Pakete über logische Pfade (VP, VC) zu übertragen sind, wobei das besagte Netzwerk zur Sicherung eines logischen, sogenannten Hauptpfads (VPI1) zwischen einem ersten und einem zweiten Kommutationsknoten Verfahren aufweist, um dem besagten Hauptpfad mindestens einen anderen logischen, sogenannten Notpfad (VPI2) zur Übertragung derselben Pakete beizuordnen, wobei der besagte zweite Knoten Verfahren zur Kommutation eines Hauptpfads an einen Notpfad aufweist,
**dadurch gekennzeichnet, dass** der logische Hauptpfad und der logische Nebenpfad verschiedene Wege nehmen, der zweite Knoten Verfahren zur Berechnung einer Versetzung (|CVPP-CVPS|) zwischen den über die besagten Pfade erhaltenen Pakete aufweist, und Kontrollverfahren, um die besagte Versetzung beim Umschalten des Hauptpfades zum Notpfad zu berücksichtigen, um Verluste oder Duplizierungen von Paketen zu vermeiden.

2. Kommutationsknoten (C1, C2, C3) zur Verwendung in einem Netzwerk zur Kommutation von Paketen (ATM), in dem die Pakete über logische Pfade (VP, VC) übertragen werden und das zur Sicherung eines logischen, sogenannten Hauptpfads (VPI1) Verfahren aufweist, um diesem Hauptpfad mindestens einen anderen logischen, sogenannten Notpfad (VPI2) zur Übertragung derselben Pakete beizuordnen, wobei der besagte Knoten Verfahren zur Umschaltung eines Hauptpfads an einen Notpfad aufweist,
**dadurch gekennzeichnet, dass** der logische Hauptpfad und der logische Nebenpfad verschiedene Wege nehmen, der besagte Knoten Verfahren zur Berechnung einer Versetzung (|CVPP-CVPS|) zwischen den über die besagten Pfade erhaltenen Pakete aufweist, und Kontrollverfahren, um die besagte Versetzung beim Umschalten des Hauptpfads zum Notpfad zu berücksichtigen, um Verluste oder Duplizierungen von Paketen zu vermeiden.

3. Kommunikationsknoten nach Anspruch 2, wobei die Umschaltverfahren von einem Hauptpfad zu einem Notpfad im Falle einer Funktionsstörung des besagten Hauptpfads aktiviert werden, **dadurch gekennzeichnet, dass** er Verfahren (Felder 20P bis 28) zur Detektion von Funktionsstörungen enthält, gründend auf einem Kriterium der Übertragungsgeschwindigkeit der logischen Pfade, wobei die Funktionsstörung eines Pfads nur erkannt wird, wenn seine Verspätung bestätigt wird.

4. Kommunikationsknoten nach Anspruch 2 oder 3, wobei die Umschaltverfahren im Falle einer Funktionsstörung des besagten Hauptpfads aktiviert werden, **dadurch gekennzeichnet, dass** er Verfahren zur Detektion von Funktionsstörungen enthält, gründend auf einem Kriterium der Qualität der logischen Pfade.

5. Kommunikationsknoten nach einem der Ansprüche 2 bis 4, **dadurch gekennzeichnet, dass** die Kontrollverfahren zur Umschaltung enthalten:
- einen sogenannten Kreisspeicher zum Ablegen der Pakete, die im voraus über den besagten Notpfad erhalten werden (Feld 24),
- Verfahren zum Löschen der Pakete aus dem besagten Kreisspeicher, wenn sie danach über den besagten Hauptweg erhaltenen werden (Feld 28),
- Verfahren zur Übertragung des Inhalts des Kreisspeichers an den Ausgang des besagten zweiten Kommunikationsknoten vor der Umschaltung (Feld 26).

6. Kommunikationsknoten nach Anspruch 5, **dadurch gekennzeichnet, dass** die Kontrollverfahren zur Umschaltung enthalten:
- einen sogenannten Zusatzspeicher zum Ablegen der Pakete, die im voraus über den besagten Notpfad erhalten werden, wenn die von den besagten Rechenverfahren gelieferte Versetzung die Größe des besagten Kreisspeichers übersteigt,
- Verfahren zum Ausgeben des Inhalts des besagten Zusatzspeichers vor dem Umschalten, wenn die Pakete danach über den besagten Hauptweg erhaltenen werden.

7. Kommunikationsknoten nach einem der Ansprüche 2 bis 6, **dadurch gekennzeichnet, dass** die Rechenverfahren aufweisen:
- Zähler (CVPP, CVPS) der über die logischen Pfade erhaltenen Pakete,
- Vergleichsverfahren der Pakete selber Rangordnung, erhalten über den Hauptpfad und über den Notpfad (Feld 7, Feld 16),
- Validierungsverfahren der besagten Versetzung nach der Differenz zwischen den besagten Zählern, wenn Pakete derselben Rangordnung identisch sind (Feld 8, Feld 17).

8. Kommunikationsknoten nach einem der Ansprüche 2 bis 7, **dadurch gekennzeichnet, dass** die besagten Rechenverfahren periodische Prüfverfahren des Wertes der besagten Versetzung aufweisen.

9. ATM-Kommunikationsknoten nach einem der Ansprüche 7 oder 8, in dem die verarbeiteten Pakete mit Zellen bezeichnet werden, **dadurch gekennzeichnet, dass** er Verfahren aufweist, um zwischen die Datenzellen Wartungszellen einzufügen, sogenannte OAM-Zellen, definiert in der Empfehlung 16010 des CCITT, und dadurch, dass die besagten Zähler mit dem Feldwert TUC der erhaltenen OAM-Zellen initiiert werden.

10. ATM-Kommunikationsknoten nach einem der Ansprüche 2 bis 9, **dadurch gekennzeichnet, dass** die besagten logischen Pfade virtuelle Leitungen sind.

## Claims

1. A packet switching telecommunications network (ATM) comprising a plurality of switching nodes (C1, C2, C3) between which packets are intended to be transported by logic paths (VP, VC), said network comprising, for securing a logic path called main path (VPI1) between a first and a second switching node, means for linking at least another logic path (VPI2) called substitute path intended to transport the same packets, the second node comprising switching means for switching from a main path to a substitute path, **characterized in that** while the main logic path and the substitute logic path take different routes, the second node comprises calculation means for calculating a shift (|CVPP - CVPS|) between the packets received on said paths, and check means for taking said shift into account during the switching from the main path to the substitute path to avoid packet losses or packet duplications.

2. A switching node (C1, C2, C3) intended to be used in a packet switching network (ATM) in which the packets are transported by logic paths (VP, VC) said network comprising, for securing a logic path called main path (VPI1), means for linking to this main path at least another logic path (VPI2) called substitute path intended to transport the same packets, said node comprising switching means for switching from a main path to a substitute path, **characterized in that** while the main logic path and the substitute logic path take different routes, said node comprises calculation means for calculating a shift (| CVPP - CVPS|) between the packets received on said paths, and check means for taking said shift into account during the switching from the main path to the substitute path to avoid packet losses or packet duplications.

3. A switching node as claimed in Claim 2, of which the switching means for switching from a main path to a substitute path are activated in case said main path malfunctions, **characterized in that** it comprises malfunction detection means (boxes 20P to 28) based on a criterion of transmission speed of the logic paths, the malfunctioning of a path being detected only when its delay is confirmed.

4. A switching node as claimed in one of the Claims 2 or 3, whose switching means for switching from a main path to a substitute path are activated in the case of malfunctioning of said main path, **characterized in that** it comprises malfunction detection means based on a quality criterion of the logic paths.

5. A switching node as claimed in any one of the Claims 2 to 4, **characterized in that** said check means comprise:
- a memory called circulating memory intended to store the packets received previously on said substitute path (box 24),
- means for deleting the packets from said circulating memory when they are subsequently received on said main path (box 28),
- means for transmitting the contents of the circulating memory at the output of said second switching node before they are switched (box 26).

6. A switching node as claimed in Claim 5, **characterized in that** said check means comprise:
- a memory called additional memory intended to store the packets received beforehand on said substitute path when the shift produced by said calculation means is larger than the size of said circulating memory,
- means for handling the contents of said additional memory before switching them when said packets are subsequently received on said main path.

7. A switching node as claimed in any one of the Claims 2 to 6, **characterized in that** the calculation means comprise:
- counters (CVPP, CVPS) for counting the packets received on said logic paths,
- comparing means for comparing packets of the same rank received on the main path and on the substitute path (box 7, box 16),
- confirmation means for confirming said shift on the basis of the difference between said counters when the packets of the same rank are identical (box 8; box 17).

8. A switching node as claimed in any one of the Claims 2 to 7, **characterized in that** said calculation means comprise periodic check means for periodically checking the value of said shift.

9. An ATM switching node as claimed in one of the Claims 7 or 8 in which the processed packets are called cells, **characterized in that** it comprises means for inserting between the data cells operation and maintenance cells called OAM cells defined in Recommendation 1610 of CCITT, and **in that** said counters are initialized with the value of the TUC field of the received OAM cells.

10. An ATM switching node as claimed in any one of the Claims 2 to 9, **characterized in that** said logic paths are virtual paths.
